# EUROPEAN PATENT SPECIFICATION

(11) **EP 3 940 813 B1**
(45) Date of publication and mention of the grant of the patent: **18.10.2023**
(21) Application number: 21185573.9
(22) Date of filing: 14.07.2021
(51) Int. Cl.: H01M 4/134, H01M 4/485, H01M 4/02, H01M 4/583, H01M 4/38, H01M 4/131, H01M 4/133

(54) **NEGATIVE ACTIVE MATERIAL FOR RECHARGEABLE LITHIUM BATTERY AND RECHARGEABLE LITHIUM BATTERY INCLUDING SAME**
NEGATIVAKTIVMATERIAL FÜR WIEDERAUFLADBARE LITHIUMBATTERIE UND WIEDERAUFLADBARE LITHIUMBATTERIE DAMIT
MATÉRIAU ACTIF NÉGATIF POUR BATTERIE AU LITHIUM RECHARGEABLE ET BATTERIE AU LITHIUM RECHARGEABLE LE COMPRENANT

(30) Priority: 15.07.2020 KR 20200087609
(43) Date of publication of application: 19.01.2022
(73) Proprietor: Samsung SDI Co., Ltd., Yongin-si, Gyeonggi-do 17084 (KR)
(72) Inventor: SHIN, Changsu, Yongin-si (KR); CHU, Heeyoung, Yongin-si (KR); KIM, Youngugk, Yongin-si (KR); KIM, Jaemyung, Yongin-si (KR); YOUM, Chul, Yongin-si (KR); WON, Jongmin, Yongin-si (KR); LEE, Dae-Hyeok, Yongin-si (KR); LEE, Jungho, Yongin-si (KR)
(74) Representative: Russell, Tim

(56) References cited:
- EP-A1- 3 382 779
- CN-A- 110 993 925
- US-A1- 2006 286 456

## Description

### BACKGROUND OF THE INVENTION

### (a) Field of the Invention

A negative active material for a rechargeable lithium battery and a rechargeable lithium battery including the same are disclosed.

### (b) Description of the Related Art

Rechargeable lithium batteries are attracting attention as power sources for various electronic devices because of high discharge voltage and high energy density.

As for positive active materials of rechargeable lithium batteries, a lithium-transition metal oxide having a structure capable of intercalating lithium ions such as LiCoO₂, LiMn₂O₄, LiNi₁₋ₓCoₓO₂ (0 < x < 1), and the like has been used.

As for negative active materials of rechargeable lithium batteries, various carbon-based materials such as artificial graphite, natural graphite, and hard carbon capable of intercalating and deintercalating lithium ions, or silicon-based active materials have been used. In particular, for the manufacture of high-capacity batteries, research is being conducted on silicon-based active materials. CN 110 993 925 A discloses negative active materials.

As for electrolytes of rechargeable lithium batteries, an organic solvent in which a lithium salt is dissolved has been used.

### SUMMARY OF THE INVENTION

An embodiment provides a negative active material for a rechargeable lithium battery exhibiting excellent high rate capability, cycle-life characteristics, and reduced ionic resistance.

Another embodiment provides a rechargeable lithium battery including the negative active material.

According to an embodiment, a negative active material for a rechargeable lithium battery includes a core including silicon nanoparticles and a lithium titanium-based oxide; and an amorphous carbon layer on the surface of the core.

The amorphous carbon layer may be disposed while continuously surrounding the surface of the core.

The core may include the silicon nanoparticles and the lithium titanium-based oxide in the form of an aggregate assembly thereof.

The lithium titanium-based oxide may be represented by Chemical Formula 1.

[Chemical Formula 1] Li₄₊ₓTi_{y}M_{z}Oₜ

In Chemical Formula 1, 0 ≤ x ≤ 5, 1 ≤ y ≤ 5, 0 ≤ z ≤ 3, 3 ≤ t ≤ 12, and M is an element selected from Mg, La, Tb, Gd, Ce, Pr, Nd, Sm, Ba, Sr, Ca, or combination thereof.

The lithium titanium-based oxide may be Li₄Ti₅O₁₂.

A mixing ratio of the silicon nanoparticles and the lithium titanium-based oxide may be a weight ratio of about 95 : 5 to about 80 : 20.

A thickness of the amorphous carbon layer may be about 100 nm to about 2 µm.

The particle diameter of the silicon nanoparticles may be about 50 nm to about 200 nm.

According to another embodiment, a negative electrode for a rechargeable lithium battery includes a current collector and a negative active material layer disposed on the current collector and including the negative active material.

The negative active material layer may further include a crystalline carbon negative active material. In this case, a total content of silicon nanoparticles and lithium titanium-based oxide included in the negative active material layer may be less than or equal to about 9.5 wt% based on 100 wt% of the total negative active material layer. In addition, the amount of the silicon nanoparticles included in the negative active material layer may be about 2 times to about 10 times the amount of the lithium titanium-based oxide.

According to another embodiment, a rechargeable lithium battery includes the negative electrode; a positive electrode including a positive active material; and a non-aqueous electrolyte.

Other embodiments are included in the following detailed description.

The negative active material for a rechargeable lithium battery according to an embodiment has excellent high rate characteristics and cycle-life characteristics, and may exhibit reduced ionic resistance.

According to an aspect, there is provided a negative active material as set out in claim 1. Additional features are set out in claims 2 to 8. According to an aspect, there is provided a negative electrode for a rechargeable lithium battery as set out in claim 9. Additional features are provided in claims 10 to 12. According to an aspect there is provided a rechargeable lithium battery as set out in claim 13.

### BRIEF DESCRIPTION OF THE DRAWINGS

FIG. 1 is a schematic view showing a negative active material for a rechargeable lithium battery according to an embodiment.
FIG. 2 is a schematic view showing a rechargeable lithium battery according to another embodiment.
FIG. 3 is a graph showing high-rate cycle-life characteristics of the rechargeable lithium battery cells manufactured according to Example 1 and Comparative Examples 1 to 6.

### DETAILED DESCRIPTION OF THE INVENTION

Hereinafter, embodiments of the present invention are described in detail. However, these embodiments are exemplary, the present invention is not limited thereto and the present invention is defined by the scope of claims.

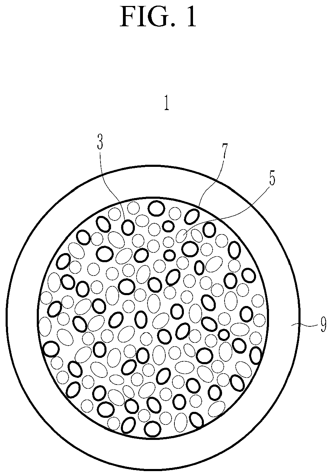

An embodiment provides a negative active material for a rechargeable lithium battery including a core including silicon nanoparticles and a lithium titanium-based oxide and an amorphous carbon layer on the surface of the core. FIG. 1 schematically shows a negative active material, wherein the negative active material 1 includes a core 7 including silicon nanoparticles 3 and lithium titanium-based oxide 5 and an amorphous carbon layer 9 formed on the surface of the core.

The amorphous carbon layer is formed while continuously surrounding the surface of the core, and the amorphous carbon layer may be disposed to substantially cover the surface of the core. The amorphous carbon layer may be disposed to completely cover the surface of the core. Accordingly, the silicon nanoparticles and lithium titanium-based oxide included in the core may not be exposed to the outside. If the lithium titanium-based oxide is present on the surface of the active material and exposed to the outside, the specific surface area increases and irreversible by-products due to the reaction with the electrolyte increase, which may cause problems such as a decrease in cycle-life. However, the active material according to an embodiment is suitable because the lithium titanium-based oxide is completely covered with the amorphous carbon layer, so that the problem of exposure to the outside does not occur.

The amorphous carbon layer may have a thickness of about 100 nm to about 2 µm. When the thickness of the amorphous carbon layer is included in the above range, the core surface may be completely covered without being exposed, and high capacity and high efficiency characteristics may be maintained, and cycle-life characteristics may also be improved. If the thickness of the amorphous carbon layer is thicker than the above range, capacity and efficiency may be lowered, which may not be appropriate.

In an embodiment, the core may include the silicon nanoparticles and the lithium titanium-based oxide in the form of an aggregate assembly thereof, that is, the silicon nanoparticles and the lithium titanium-based oxide are aggregated and assembled to be included in the active material as an assembly. As described above, when the lithium titanium-based oxide is included in the core, the ion conductivity of lithium ions may be improved, thereby improving the intercalation and deintercalation of lithium ions to the inside of the silicon particles, thereby improving high power performance. In addition, this effect may be further maximized when the lithium titanium-based oxide is aggregated with silicon nanoparticles having a higher resistance than graphite to form a core. If it is disposed on the surface of the active material, as mentioned above, the specific surface area of the active material increases, which may cause deterioration of long cycle-life characteristics due to an increase in irreversible side products.

A mixing ratio of the silicon nanoparticles and the lithium titanium-based oxide may be a weight ratio of about 95: 5 to about 80: 20. When the mixing ratio of the silicon nanoparticles and the lithium titanium-based oxide is included in the above range, high power characteristics may be improved without deterioration in capacity and efficiency. When the lithium titanium-based oxide is in excess of the above range, the capacity may be slightly lowered.

In the negative active material according to an embodiment, while maintaining the mixing ratio of the silicon nanoparticles and the lithium titanium-based oxide, the silicon nanoparticles may be included in an amount of about 45 wt% to about 70 wt% based on 100 wt% of the total negative active material, and the lithium titanium-based oxide may be included in an amount of about 6 wt% to about 15 wt% based on 100 wt% of the total negative active material. When the amounts of the silicon nanoparticles and lithium titanium-based oxide are included in the above range, excellent capacity and efficiency may be exhibited, and improved high power characteristics may be exhibited.

The particle diameter of the silicon nanoparticles may be about 50 nm to about 200 nm. When the particle diameter of the silicon nanoparticles falls within the above range, there may be advantages of economical, easy handling, and small volume expansion during charging and discharging.

In this context, the particle diameter may be the median particle diameter of the particles. In this case, the median particle diameter may mean a particle diameter (D50) measured as a cumulative volume. Unless otherwise defined herein, the particle diameter (D50) means the median particle diameter (D50), which means the diameter of particles having a cumulative volume of 50 volume% in the particle size distribution. The median particle size (D50) may be measured by a method well known to those skilled in the art, for example, by a particle size analyzer.

The lithium titanium-based oxide may be represented by Chemical Formula 1.

[Chemical Formula 1] Li₄₊ₓTi_{y}M_{z}Oₜ

In Chemical Formula 1, 0 ≤ x ≤ 5, 1 ≤ y ≤ 5, 0 ≤ z ≤ 3, 3 ≤ t ≤ 12, and M is an element selected from Mg, La, Tb, Gd, Ce, Pr, Nd, Sm, Ba, Sr, Ca, or a combination thereof.

The lithium titanium-based oxide may be Li₄Ti₅O₁₂.

The lithium titanium-based oxide may have a particle diameter of about 0.1 µm to about 6 µm. If the particle size of the lithium titanium-based oxide is included in the above range, there may be advantages electrochemically, and it may be uniformly dispersed with silicon without nozzle clogging or agglomeration in the active material preparation process, especially in the spray drying process.

The amorphous carbon may be soft carbon, hard carbon, a mesophase pitch carbonized product, calcined coke, or a combination thereof.

In an embodiment, the content of the amorphous carbon may be about 24 wt% to about 49 wt% based on 100 wt% of the total negative active material.

In the negative active material according to an embodiment, amorphous carbon is present as a coating layer disposed on the surface of the core. In the preparation process of the negative active material, amorphous carbon may naturally penetrate into some of the core and exist. In an embodiment most of the amorphous carbon is present as a coating layer on the surface of the core.

If the amorphous carbon is mostly present inside the core, that is, when it is prepared by mixing silicon nanoparticles, lithium titanium-based oxide, and an amorphous carbon precursor together, pores may be generated in the heat treatment process and the inside thereof is not dense, and cycle-life characteristics may be deteriorated.

In addition, the negative active material according to the embodiment does not include crystalline carbon, and has higher capacity and efficiency, and may exhibit excellent cycle-life characteristics, compared to the negative active material including crystalline carbon.

Such a negative active material may be prepared by the following process.

First, the silicon nanoparticles and the lithium titanium-based oxide are mixed in a solvent. Herein, the silicon nanoparticles and the lithium titanium-based oxide may be mixed in a weight ratio of about 95 : 5 to about 80 : 20. When the silicon nanoparticles and the lithium titanium-based oxide are mixed within the range, high power characteristics may be improved without deteriorating capacity and efficiency. The solvent may be ethanol, isopropyl alcohol, deionized water, or a combination thereof.

The silicon nanoparticles may be obtained by pulverizing silicon particles, and this pulverization process may include ball milling and the like. In this pulverization process, a dispersing agent may be further included, for example, stearic acid, boron nitride (BN), MgS, polyvinyl pyrrolidone (PVP), or a combination thereof may be used.

The obtained mixture may be dried. This drying process may be performed through a spray drying process. As the drying process is performed using the spray drying process, a dried product having particles with a uniform particle diameter and a spherical shape may be formed. When this dried product is the particles with a uniform particle diameter and a spherical shape, an amorphous carbon layer formed thereafter may be more uniformly formed on the entire surfaces thereof.

On the dried product, the amorphous carbon layer is formed. The amorphous carbon layer-forming process may be performed by vapor-coating amorphous carbon precursor gas or mixing and carbonizing the dried product and an amorphous carbon precursor.

The amorphous carbon precursor gas may include methane (CH₄) gas, ethylene (C₂H₄) gas, acetylene (C₂H₂) gas, propane (C₃H₈) gas, propylene (C₃H₆) gas, or a combination thereof, and the amorphous carbon precursor may be petroleum-based coke, coal-based coke, petroleum pitch, coal pitch, green cokes, or a combination thereof.

When the amorphous carbon layer is formed by mixing and carbonizing the dried product and the amorphous carbon precursor, a mixing ratio of the dried product and the amorphous carbon precursor may be adjusted, so that the silicon nanoparticles, the lithium titanium-based oxide, and the amorphous carbon may be respectively in a range of about 45 wt% to about 70 wt%, about 6 wt% to about 15 wt%, and about 24 wt% to about 49 wt% in a final product. In addition, the carbonization process may be performed at about 600 °C to about 1000 °C.

Another embodiment provides a negative electrode for a rechargeable lithium battery including a current collector and a negative active material layer formed on the current collector and including the negative active material.

The negative active material includes the negative active material according to an embodiment as a first negative active material and crystalline carbon as a second negative active material. The crystalline carbon negative active material may be graphite, for example artificial graphite, natural graphite, or a combination thereof. When the crystalline carbon is included as a second negative active material, the first negative active material and the second negative active material may be mixed in a weight ratio of about 1 : 30 to about 1 : 4. When the first negative active material and the second negative active material are used in the aforementioned mixing ratio, higher specific capacity is obtained, and thus more excellent energy density may be obtained.

When the negative active material includes the negative active material according to an embodiment as a first negative active material and crystalline carbon as a second negative active material, a total amount of the silicon nanoparticles and the lithium titanium-based oxide included in the negative active material layer may be less than or equal to about 9.5 wt% or about 4.75 wt% to about 9.5 wt% based on 100 wt% of the total negative active material layer. In addition, an amount of the silicon nanoparticles may be about 2 to about 10 times larger than that of the lithium titanium-based oxide included in the negative active material layer.

When the negative active material includes the first negative active material and the second negative active material, the amounts of the silicon nanoparticles and the lithium titanium-based oxide may be less than or equal to about 10 wt% or about 5 wt% to about 10 wt% based on 100 wt% of the total negative active material. In addition, the amount of the silicon nanoparticles may be about 3 wt% to about 9 wt% based on 100 wt% of the total negative active material, and the amount of the lithium titanium-based oxide may be about 0.5 wt% to about 1.5 wt% based on 100 wt% of the total negative active material.

When the total amounts of the silicon nanoparticles and the lithium titanium-based oxide are within the ranges, long cycle-life characteristics as well as high energy density, for example, energy density of about 700 wh/l to about 900 wh/l may be achieved. Particularly, when the silicon nanoparticles are present in an amount of about 2 to about 10 times that of the lithium titanium-based oxide, high capacity, high power, and long cycle-life characteristics may be obtained.

The negative active material layer includes a negative active material and a binder, and may optionally further include a conductive material.

In the negative active material layer, the negative active material may be included in an amount of about 95 wt% to about 99 wt% based on the total weight of the negative active material layer. In the negative active material layer, an amount of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-aqueous binder, an aqueous binder, or a combination thereof.

The non-aqueous binder may include ethylenepropylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrine, polyphosphazene, an ethylenepropylenediene copolymer, polyvinylpyridine, chlorosulfonatedpolyethylene, latex, a polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, denka black, carbon fiber, and the like; a metal-based material of a metal powder or a metal fiber including copper, nickel, aluminum silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but embodiments are not limited thereto.

Another embodiment provides a rechargeable lithium battery including the negative electrode, the positive electrode, and a non-aqueous electrolyte.

The positive electrode includes a current collector and a positive active material layer disposed on the current collector and including a positive active material.

A compound capable of intercalating and deintercallating lithium (lithiated intercalation compound) may be used as the positive active material. Specifically, one or more composite oxides of a metal selected from cobalt, manganese, nickel, and a combination thereof, and lithium may be used. As a more specific example, a compound represented by any one of the following chemical formulas may be used. LiₐA_{1-b}X_{b}D₂ (0.90 ≤ a≤1.8, 0 ≤ b≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Co_{b}X_{c}O_{2-α}T_{α} (0.90 ≤ a≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤0.5, 0 ≤ c ≤ 0.5, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a≤ 1.8, 0 ≤ b ≤0.5, 0 ≤ c ≤0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤2); Li_{(3-f)}Fe₂(PO₄)₃ (0 ≤ f ≤ 2); LiₐFePO₄ (0.90 ≤ a ≤ 1.8).

In chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method (e.g., spray coating, dipping, etc.), but is not illustrated in more detail since it is well-known to those skilled in the related field.

In the positive electrode, the amount of the positive active material may be about 90 wt% to about 98 wt% based on the total weight of the positive active material layer.

In an embodiment, the positive active material layer may further include a binder and a conductive material. In this case, the amount of the binder and the conductive material may be about 1 wt% to about 5 wt%, respectively, based on the total weight of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to impart conductivity to the electrode, and any material may be used as long as it does not cause chemical change in the battery to be configured and is an electron conductive material. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may be an aluminum foil, a nickel foil, or a combination thereof, but not limited thereto.

The positive active material layer and the negative active material layer may be formed by mixing an active material, a binder, and optionally a conductive material in a solvent to prepare each active material composition, and applying the active material composition to a current collector. Since such a method for forming an active material layer is widely known in the art, a detailed description thereof will be omitted herein. The solvent includes N-methylpyrrolidone and the like, but not limited thereto. In addition, when an aqueous binder is used for the negative active material layer, water may be used as a solvent used in preparing the negative active material composition.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone, and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The non-aqueous organic solvent may be used alone or in a mixture of one or more. When the organic solvent is used in a mixture, the mixture ratio may be controlled in accordance with a desirable battery performance.

The carbonate-based solvent is prepared by mixing a cyclic carbonate and a linear carbonate. The cyclic carbonate and linear carbonate are mixed together in a volume ratio of about 1:1 to about 1:9. When the mixture is used as an electrolyte, it may have enhanced performance.

When the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

Herein, when the cyclic carbonate and the chain carbonate or the cyclic carbonate and the propionate-based solvent are mixed, they may be mixed in a volume ratio of about 1:1 to about 1:9 and thus performance of an electrolyte solution may be improved. In addition, when the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 2.

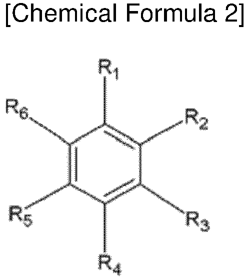

In Chemical Formula 2, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound of Chemical Formula 3 in order to improve a cycle-life of a battery, as an additive for increasing the cycle-life.

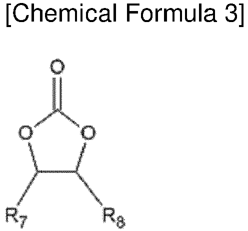

In Chemical Formula 3, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving a cycle-life may be used within an appropriate range.

The electrolyte may further include vinylethylene carbonate, propane sultone, succinonitrile, or a combination thereof, and the amount used may be appropriately adjusted.

The lithium salt dissolved in an organic solvent supplies a battery with lithium ions, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, for example an integer ranging from 1 to 20, LiCl, Lil, and LiB(C₂O₄)₂ (lithium bis(oxalato) borate: LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

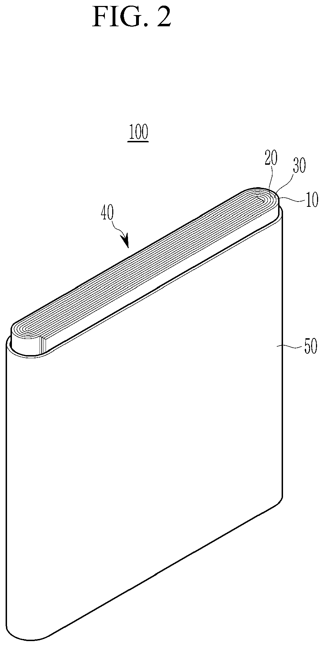

FIG. 2 is an exploded perspective view of a rechargeable lithium battery according to one embodiment. The rechargeable lithium battery according to an embodiment is illustrated as a prismatic battery but not limited thereto and may include variously-shaped batteries such as a cylindrical battery, a pouch battery, and the like.

Referring to FIG. 2, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Example 1)

Silicon and a stearic acid dispersing agent were mixed and then, ball-milled, preparing silicon nanoparticles having a median particle diameter (D50) of 100 nm.

The silicon nanoparticles and Li₄Ti₅O₁₂ (LTO, theoretical density: 3.40 g/cm³, a median particle diameter (D50): 1.2µm) were mixed in a weight ratio of 88 : 12 (in a volume ratio of 91.5 : 8.5) in an isopropyl alcohol solvent, obtaining a mixture.

The mixture is spray-dried, and this dried product was mixed with a petroleum pitch amorphous carbon precursor in order to have a weight ratio of Si:amorphous carbon:LTO = 60:32:8 in a final product and then, carbonized at 950 °C, preparing a first negative active material. According to the carbonization process, since the amorphous carbon precursor was converted into amorphous carbon, the first negative active material included a core including the silicon nanoparticles and Li₄Ti₅O₁₂ and an amorphous carbon layer thereon. Herein, the amorphous carbon layer had a thickness of 500 nm.

97.8 wt% of a mixed negative active material of the first negative active material and artificial graphite (12.0 wt% : 88.0 wt%), 1.2 wt% of a styrene-butadiene rubber binder, and 1.0 wt% of carboxylmethyl cellulose were mixed in a water solvent, preparing negative active material slurry.

The negative active material slurry was coated on a copper foil and then, dried and compressed, manufacturing a negative electrode including a negative active material layer formed on the copper foil current collector.

In the negative active material layer, the amounts of the silicon nanoparticles and LTO were 8.16 wt% based on 100 wt% of the total negative active material, wherein an amount of the silicon nanoparticles was 7.2 wt% based on 100 wt% of the total negative active material, while an amount of LTO was 0.96 wt%, and accordingly, the amount of the silicon nanoparticles was 7.5 times larger than that of LTO. In addition, the amounts of the silicon nanoparticles and LTO based on 100 wt% of the total negative active material layer were 7.75 wt%, wherein the amount of the silicon nanoparticles was 6.84 wt% based on 100 wt% of the total negative active material layer, while the amount of LTO was 0.91 wt%, and accordingly, the amount of the silicon nanoparticles was 7.5 times larger than that of LTO.

96 wt% of a LiNi_{0.88}Co_{0.1}Al_{0.02}O₂ positive active material, 2 wt% of a ketjen black conductive material, and 2 wt% of polyvinylidene fluoride were mixed in an N-methylpyrrolidone solvent, preparing positive active material slurry. The positive active material slurry was coated on an aluminum foil and then, dried and compressed, manufacturing a positive electrode.

The negative electrode, the positive electrode, and an electrolyte solution were used, manufacturing a 4.2 V-level cylindrical rechargeable lithium battery cell in a conventional method. The electrolyte solution was prepared by dissolving 1.0 M LiPF₆ in a mixed solvent of ethylene carbonate, diethyl carbonate, and dimethyl carbonate (in a volume ratio of 3/5/2).

### (Example 2)

Silicon and a stearic acid dispersing agent were mixed and then, ball-milled, preparing silicon nanoparticles having a median particle diameter (D50) of 100 nm.

The silicon nanoparticles and Li₄Ti₅O₁₂ (LTO, theoretical density: 3.40 g/cm³, a median particle diameter (D50): 1.2 µm) in a weight ratio of 88 : 12 (in a volume ratio of 91.5 : 8.5) were mixed in an isopropyl alcohol solvent, preparing a mixture.

The mixture was spray-dried, and a petroleum pitch amorphous carbon precursor was mixed with this dried product in order to have a weight ratio of Si: amorphous carbon:LTO = 52.8:40:7.2 in a final product and then, carbonized at 950 °C, preparing a first negative active material. According to the carbonization process, since the amorphous carbon precursor was converted into amorphous carbon, the first negative active material included a core including the silicon nanoparticles and Li₄Ti₅O₁₂ and an amorphous carbon layer thereon. Herein, the amorphous carbon layer had a thickness of 1µm.

97.8 wt% of a mixed negative active material of the first negative active material and artificial graphite (14.3 wt% : 85.7 wt%), 1.2 wt% of a styrene-butadiene rubber binder, and 1.0 wt% of carboxylmethyl cellulose were mixed in a water solvent, preparing negative active material slurry.

The negative active material slurry was coated on a copper foil and then, dried and compressed, manufacturing a negative electrode including a negative active material layer formed on the copper foil current collector.

In the negative active material layer, amounts of the silicon nanoparticles and LTO were 8.58 wt% based on 100 wt% of the total negative active material, wherein an amount of the silicon nanoparticles was 7.55 wt% based on 100 wt% of the total negative active material, and an amount of LTO was 1.03 wt% based on 100 wt% of the total negative active material, and accordingly, the amount of the silicon nanoparticles was 7.3 times larger than that of LTO. In addition, the amounts of the silicon nanoparticles and LTO were 8.15 wt% based on 100 wt% of the total negative active material layer, wherein the amount of the silicon nanoparticles was 7.17 wt% based on 100 wt% of the total negative active material layer, and an amount of LTO was 0.98 wt% based on 100 wt% of the total negative active material layer, and accordingly, the amount of the silicon nanoparticles was 7.3 times larger than that of LTO.

A rechargeable lithium battery cell was manufactured in the same manner as in Example 1 except that the negative electrode was used.

### (Comparative Example 1)

A first negative active material was prepared according to the same method as Example 1 except that the silicon nanoparticles and the petroleum pitch amorphous carbon precursor were mixed in order to have a weight ratio of Si:C = 60:40 in a final product and then carbonized at 950 °C.

96.8 wt% of a mixed active material of the first negative active material and an artificial graphite second negative active material (12 wt% : 88 wt%), 1 wt% of Li₄Ti₅O₁₂, 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode including a negative active material layer formed on a foil current collector.

A rechargeable lithium battery cell was manufactured in the same manner as in Example 1 except that the negative electrode was used.

### (Comparative Example 2)

97.8 wt% of a mixed active material of the first negative active material according to Comparative Example 1 and an artificial graphite second negative active material (12 wt% : 88 wt%), 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode including a negative active material layer formed on the copper foil current collector.

A rechargeable lithium battery cell was manufactured in the same manner as in Example 1 except that the negative electrode was used.

### (Comparative Example 3)

97.8 wt% of a mixed negative active material of artificial graphite and Si-carbon composite mixed in a weight ratio of 82 : 18, 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode. Herein, the Si-carbon composite had a core including natural graphite and silicon particles and soft carbon coated on the surface of the core, wherein an amount of the natural graphite was 40 wt% based on the total Si-carbon composite, while an amount of the silicon particles was 40 wt%, and an amount of the amorphous carbon was 20 wt%. The soft carbon coating layer had a thickness of 20 nm, and the silicon particles had a median particle diameter (D50) of 100 nm.

A rechargeable lithium battery cell was manufactured in the same manner as in Example 1 except that the negative electrode was used.

### (Comparative Example 4)

96.8 wt% of a mixed negative active material of artificial graphite and Si-carbon composite in a weight ratio of 82: 18, 1 wt% of Li₄Ti₅O₁₂, 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode. Herein, the Si-carbon composite had a core including natural graphite and silicon particles and soft carbon coated on the surface of the core, wherein an amount of the natural graphite was 40 wt% based on the total Si-carbon composite, while an amount of the silicon particles was 40 wt%, and an amount of the amorphous carbon was 20 wt%. The soft carbon coating layer had a thickness of 20 nm, and the silicon particles had a median particle diameter (D50) of 100 nm.

A rechargeable lithium battery cell was manufactured in the same manner as in Example 1 except that the negative electrode was used.

### (Comparative Example 5)

The silicon nanoparticles according to Example 1, Li₄Ti₅O₁₂, and natural graphite in a ratio of 50 :8 : 42 wt% were mixed in an isopropyl alcohol solvent, preparing a mixture.

The mixture was spray-dried, and a petroleum pitch amorphous carbon precursor was added to the spray-dried product in order to have a weight ratio of Si:natural graphite:amorphous carbon:LTO = 40:33.6:20:6.4 in a final product and carbonized at 950 °C, preparing a first negative active material.

97.8 wt% of a mixed negative active material of the first negative active material and artificial graphite (18 wt% : 82 wt%), 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode including a negative active material layer formed on the copper foil current collector.

A rechargeable lithium battery cell was manufactured in the same manner as in Example 1 except that the negative electrode was used.

### (Comparative Example 6)

The silicon nanoparticles according to Example 1, Li₄Ti₅O₁₂, and soft carbon were mixed in a ratio of 60 : 10 : 30 wt%, preparing a first negative active material.

97.8 wt% of a mixed active material of the first negative active material and an artificial graphite second negative active material (12 wt% : 88 wt%), and 1.2 wt% of a styrene-butadiene rubber binder, and 1 wt% of carboxylmethyl cellulose were mixed in a water solvent, preparing negative active material slurry.

The negative active material slurry was coated on a copper foil and then, dried and compressed, manufacturing a negative electrode including a negative active material layer formed on the copper foil current collector.

A rechargeable lithium battery cell was manufactured in the same manner as in Example 1 except that the negative electrode was used.

### Experimental Example 1: Evaluation of High-rate Cycle-life Characteristics

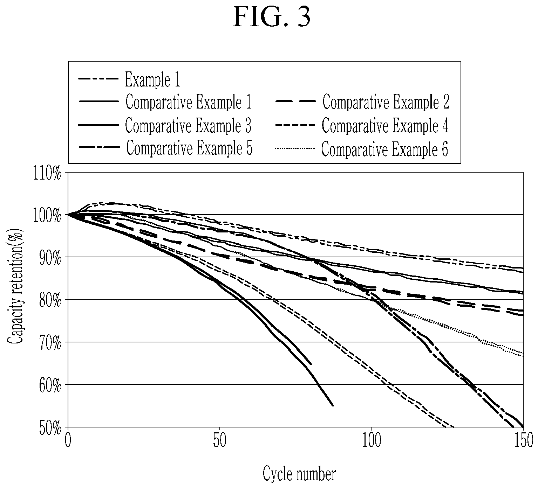

The lithium battery cells according to Example 1 and Comparative Examples 1 to 6 were manufactured by two each and then, charged at 1.0 C under a cut-off condition of 4.0 V and 0.05 C and discharged at 1.0 C under a cut-off condition of 2.5 V, and this charge and discharge was 150 times repeated to measure capacity retention relative to 1^{st} capacity, and the results are shown in FIG. 3. As shown in FIG. 3, even though a rechargeable lithium battery cell using the negative active material having a core including silicon nanoparticles and lithium titanium oxide according to Example 1 was 150 times charged and discharged at a high rate of 1.0 C, high capacity retention of about 88% was obtained. On the contrary, Comparative Example 1, in which Si-C composite and lithium titanium oxide were physically mixed, that is, the Si-C composite was present on the surface of the lithium titanium oxide, exhibited deteriorated capacity retention of about 80%, and Comparative Example 2 in which only Si-C composite is mixed without lithium titanium-based oxide exhibited more deteriorated capacity retention. Comparative Examples 3 and 4 including no lithium titanium oxide exhibited sharply deteriorated capacity retention.

Even through the lithium titanium oxide was included in the core, Comparative Example 5 further using natural graphite in the core exhibited significantly deteriorated capacity retention when about 80 times charged and discharged.

Comparative Example 6, in which silicon nanoparticles, lithium titanium oxide, and petroleum pitch were mixed, also exhibited significantly deteriorated capacity retention.

As discussed, embodiments can provide a negative active material for a rechargeable lithium battery, comprising a core including silicon nanoparticles and a lithium titanium-based oxide and an amorphous carbon layer on the surface of the core.

The amorphous carbon layer may be disposed while continuously surrounding the surface of the core. The amorphous carbon layer may be disposed to substantially cover the surface of the core. The amorphous carbon layer may be disposed to completely cover the surface of the core.
The core may include the silicon nanoparticles and the lithium titanium-based oxide in the form of an aggregate assembly thereof.

As discussed, embodiments can provide a negative electrode for a rechargeable lithium battery, comprising a current collector and a negative active material layer disposed on the current collector comprising the negative active material according to any of the discussed embodiments.

As discussed, embodiments can provide a rechargeable lithium battery, comprising the negative electrode according to any of the embodiments; a positive electrode comprising a positive active material; and a non-aqueous electrolyte.

While this invention has been described in connection with what is presently considered to be practical example embodiments, it is to be understood that the invention is not limited to the disclosed embodiments. On the contrary, it is intended to cover various modifications and equivalent arrangements. The invention is defined by the appended claims. Therefore, the aforementioned embodiments should be understood to be exemplary but not limiting the present invention in any way.

## Claims

1. A negative active material for a rechargeable lithium battery, comprising
a core including silicon nanoparticles and a lithium titanium-based oxide and
an amorphous carbon layer on the surface of the core.

2. The negative active material of claim 1, wherein the amorphous carbon layer is disposed while continuously surrounding the surface of the core.

3. The negative active material of claims 1 or 2, wherein the core comprises the silicon nanoparticles and the lithium titanium-based oxide in the form of an aggregate assembly thereof.

4. The negative active material of any one of claims 1 to 3, wherein the lithium titanium-based oxide is represented by Chemical Formula 1:
[Chemical Formula 1] Li₄₊ₓTi_{y}M_{z}Oₜ
wherein, in Chemical Formula 1, 0 ≤ x ≤ 5, 1 ≤ y ≤ 5, 0 ≤ z ≤ 3, 3 ≤ t ≤ 12, and M is an element selected from Mg, La, Tb, Gd, Ce, Pr, Nd, Sm, Ba, Sr, Ca, or combination thereof.

5. The negative active material of claim 4, wherein the lithium titanium-based oxide is Li₄Ti₅O₁₂.

6. The negative active material of any one of claims 1 to 5, wherein a mixing ratio of the silicon nanoparticles and the lithium titanium-based oxide is a weight ratio of about 95 : 5 to about 80 : 20.

7. The negative active material of any one of claims 1 to 6, wherein a thickness of the amorphous carbon coating layer is about 100 nm to about 2 µm.

8. The negative active material of any one of claims 1 to 7, wherein the particle diameter of the silicon nanoparticles is about 50 nm to about 200 nm.

9. A negative electrode for a rechargeable lithium battery, comprising
a current collector and
a negative active material layer disposed on the current collector comprising the negative active material of any one of claims 1 to 8.

10. The negative electrode of claim 9, wherein the negative active material layer further comprises a crystalline carbon negative active material.

11. The negative electrode of claim 10, wherein a total content of silicon nanoparticles and lithium titanium-based oxide included in the negative active material layer is less than or equal to about 9.5 wt% based on 100 wt% of the negative active material layer.

12. The negative electrode of any one of claims 9 to 11, wherein the content of the silicon nanoparticles included in the negative active material layer is about 2 times to about 10 times the content of the lithium titanium-based oxide.

13. A rechargeable lithium battery, comprising
the negative electrode of claim 9;
a positive electrode comprising a positive active material; and
a non-aqueous electrolyte.

## Patentansprüche

1. Negativaktivmaterial für eine wiederaufladbare Lithiumbatterie, umfassend
einen Kern mit Silizium-Nanopartikeln und einem Oxid auf Lithium-Titan-Basis und
eine amorphe Kohlenstoffschicht auf der Oberfläche des Kerns.

2. Negativaktivmaterial nach Anspruch 1, wobei die amorphe Kohlenstoffschicht so angeordnet ist, dass sie die Oberfläche des Kerns kontinuierlich umgibt.

3. Negativaktivmaterial nach Anspruch 1 oder 2, wobei der Kern die Silizium-Nanopartikel und das Oxid auf Lithium-Titan-Basis in Form einer Aggregat-Anordnung davon umfasst.

4. Negativaktivmaterial nach einem der Ansprüche 1 bis 3, wobei das Oxid auf Lithium-Titan-Basis durch die chemische Formel 1 dargestellt wird:
[Chemische Formel 1] Li₄₊ₓTi_{y}M_{z}Oₜ
wobei in der chemischen Formel 1 0 ≤ x ≤ 5, 1 ≤ y ≤ 5, 0 ≤ z ≤ 3, 3 ≤ t ≤ 12 und M ein aus Mg, La, Tb, Gd, Ce, Pr, Nd, Sm, Ba, Sr, Ca oder einer Kombination davon ausgewähltes Element ist.

5. Negativaktivmaterial nach Anspruch 4, wobei das Oxid auf Lithium-Titan-Basis Li₄Ti₅O₁₂ ist.

6. Negativaktivmaterial nach einem der Ansprüche 1 bis 5, wobei das Mischungsverhältnis der Silizium-Nanopartikel und des Oxids auf Lithium-Titan-Basis ein Gewichtsverhältnis von etwa 95:5 bis etwa 80:20 ist.

7. Negativaktivmaterial nach einem der Ansprüche 1 bis 6, wobei die Dicke der amorphen Kohlenstoffüberzugsschicht etwa 100 nm bis etwa 2 µm beträgt.

8. Negativaktivmaterial nach einem der Ansprüche 1 bis 7, wobei der Teilchendurchmesser der Silizium-Nanopartikel etwa 50 nm bis etwa 200 nm beträgt.

9. Negative Elektrode für eine wiederaufladbare Lithiumbatterie, umfassend:
einen Stromkollektor und
eine auf dem Stromkollektor angeordnete Negativaktivmaterialschicht, die das Negativaktivmaterial nach einem der Ansprüche 1 bis 8 enthält.

10. Negative Elektrode nach Anspruch 9, wobei die Negativaktivmaterialschicht ferner ein Negativaktivmaterial aus kristallinem Kohlenstoff umfasst.

11. Negative Elektrode nach Anspruch 10, wobei der Gesamtgehalt an Silizium-Nanopartikeln und Oxid auf Lithium-Titan-Basis, die in der Negativaktivmaterialschicht enthalten sind, weniger als oder gleich etwa 9,5 Gew.-% beträgt, bezogen auf 100 Gew.-% der gesamten Negativaktivmaterialschicht.

12. Negative Elektrode nach einem der Ansprüche 9 bis 11, wobei der Gehalt an Silizium-Nanopartikeln in der Negativaktivmaterialschicht etwa das 2-bis 10-fache des Gehalts an Oxid auf Lithium-Titan-Basis beträgt.

13. Wiederaufladbare Lithiumbatterie, die Folgendes umfasst die negative Elektrode nach Anspruch 9;
eine positive Elektrode mit einem Positivaktivmaterial; und
einen nichtwässrigen Elektrolyt.

## Revendications

1. Matériau actif négatif pour une batterie au lithium rechargeable, comprenant
un noyau comportant des nanoparticules de silicium et un oxyde à base de lithium et de titane et
une couche de carbone amorphe sur la surface du noyau.

2. Matériau actif négatif selon la revendication 1, dans lequel la couche de carbone amorphe est disposée tout en enveloppant en continu la surface du noyau.

3. Matériau actif négatif selon les revendications 1 ou 2, dans lequel le noyau comprend les nanoparticules de silicium et l'oxyde à base de lithium et de titane sous la forme d'un ensemble agrégé de ceux-ci.

4. Matériau actif négatif selon l'une quelconque des revendications 1 à 3, dans lequel l'oxyde à base de lithium et de titane est représenté par la Formule Chimique 1 :
[Formule Chimique 1] Li₄₊ₓTi_{y}M_{z}Oₜ
dans lequel, dans la Formule Chimique 1, 0 ≤ x ≤ 5, 1 ≤ y ≤ 5, 0 ≤ z ≤ 3, 3 ≤ t ≤ 12, et M est un élément sélectionné parmi Mg, La, Tb, Gd, Ce, Pr, Nd, Sm, Ba, Sr, Ca, ou une combinaison de ceux-ci.

5. Matériau actif négatif selon la revendication 4, dans lequel l'oxyde à base de lithium et de titane est Li₄Ti₅O₁₂.

6. Matériau actif négatif selon l'une quelconque des revendications 1 à 5, dans lequel un rapport de mélange des nanoparticules de silicium et de l'oxyde à base de lithium et de titane est un rapport en poids d'environ 95 : 5 à environ 80 : 20.

7. Matériau actif négatif selon l'une quelconque des revendications 1 à 6, dans lequel une épaisseur de la couche de revêtement en carbone amorphe est d'environ 100 nm à environ 2 µm.

8. Matériau actif négatif selon l'une quelconque des revendications 1 à 7, dans lequel le diamètre particulaire des nanoparticules de silicium est d'environ 50 nm à environ 200 nm.

9. Électrode négative pour une batterie au lithium rechargeable, comprenant
un collecteur de courant et
une couche de matériau actif négatif disposée sur le collecteur de courant comprenant le matériau actif négatif selon l'une quelconque des revendications 1 à 8.

10. Électrode négative selon la revendication 9, dans laquelle la couche de matériau actif négatif comprend en outre un matériau actif négatif en carbone cristallin.

11. Électrode négative selon la revendication 10, dans laquelle une teneur totale de nanoparticules de silicium et d'oxyde à base de lithium et de titane compris dans la couche de matériau actif négatif est inférieure ou égale à environ 9,5 % en poids sur la base de 100 % en poids de la couche de matériau actif négatif.

12. Électrode négative selon l'une quelconque des revendications 9 à 11, dans laquelle la teneur des nanoparticules de silicium comprises dans la couche de matériau actif négatif est d'environ 2 fois à environ 10 fois la teneur de l'oxyde à base de lithium et de titane.

13. Batterie au lithium rechargeable, comprenant l'électrode négative selon la revendication 9 ;
une électrode positive comprenant un matériau actif positif ; et
un électrolyte non aqueux.
